# EUROPÄISCHE PATENTSCHRIFT

(11) **EP 2 786 058 B1**
(45) Veröffentlichungstag und Bekanntmachung des Hinweises auf die Patenterteilung: **16.05.2018**
(21) Anmeldenummer: 12816427.4
(22) Anmeldetag: 29.11.2012
(51) Int. Cl.: E04B 9/06, E04B 5/12, F16L 57/00, F16L 29/00, F16L 23/032

(54) **KUPPLUNG FÜR TIEFKALT VERFLÜSSIGTE GASE**
COUPLING FOR CRYOGENIC LIQUEFIED GASES
RACCORD POUR GAZ CRYOGÉNIQUES

(30) Priorität: 01.12.2011 AT 17812011
(43) Veröffentlichungstag der Anmeldung: 08.10.2014
(73) Patentinhaber: Hermeling, Werner, 7100 Neusiedl am See (AT); Fuchs, Werner, 2443 Loretto (AT)
(72) Erfinder: Hermeling, Werner, 7100 Neusiedl am See (AT); Fuchs, Werner, 2443 Loretto (AT)
(74) Vertreter: Keschmann, Marc
(86) Internationale Anmeldenummer: PCT/AT2012/000300
(87) Internationale Veröffentlichungsnummer: WO 2013/078488

(56) Entgegenhaltungen:
- FR-A5- 2 031 689
- US-A- 2 958 544
- US-A- 3 746 043
- US-A- 5 191 914

## Beschreibung

Die Erfindung betrifft eine Kupplung für tiefkalt verflüssigte Gase umfassend zwei lösbar miteinander verbindbare komplementäre Kupplungshälften, die jeweils ein den Durchfluss des Gases sperrendes oder freigebendes Ventil aufweisen, wobei die Ventile jeweils ein in axialer Richtung verschiebbar gelagertes Ventilschließglied aufweisen, das gegen einen Ventilsitz pressbar ist, wobei die Ventilschließglieder im miteinander verbundenen Zustand der Kupplungshälften entlang einer Trennebene der Kupplung in axialer Richtung miteinander zusammenwirken.

Tiefkalt verflüssigte Gase, wie z.B. flüssiges Methan (LNG), andere flüssige Kohlenwasserstoffe, flüssige Luft, flüssiger Stickstoff, flüssiger Wasserstoff etc., werden in den verschiedensten Industriezweigen benötigt. Diese Gase müssen in der Regel in hoher Reinheit zur Verfügung gestellt werden. Die Gefahr einer Verschmutzung durch stofffremde Stoffe während des Durchlaufens der verschiedenen Stufen der Bereitstellungskette ist jedoch sehr hoch. Es ist beispielsweise sehr schwierig, die Verschmutzung der genannten Gase durch molekulares Wasser zu verhindern, da Wasser in der Regel beim Umtanken von Tank zu Tank (vom Lagertank des Gaslieferanten in einen Straßentankwagen und vom Straßentankwagen in den Tank eines Verbrauchers) sehr leicht eindringen kann.

Um die Gefahr einer Verschmutzung des tiefkalt verflüssigten Gases zu verringern, sind bei den Gasherstellern verschiedenste Kupplungen in Gebrauch, mit denen die beim Umtanken des Gases verwendeten Verbindungsleitungen oder -schläuche miteinander lösbar verbunden werden. Mit den bekannten Kupplungen gelingt eine sichere und zuverlässige Vermeidung des Feuchtigkeitseintritts jedoch nicht. Der Grund liegt darin, dass bei allen Kupplungen Luft an die produktzugewandte Seite der übertragenden Bauteile gelangen kann. Die Luft an sich, welche sich im Schlauch befindet, kann durch einen sauber durchgeführten Spülprozess entfernt werden. Dieser Spülprozess erfolgt jedoch mit dem Gas, welches im Gasraum des abgebenden Behälters ist. Die Temperatur liegt nahe dem Siedepunkt des Gases, also weit unter 273K. Beim Spülen trifft diese Kälte des Spülgases auf Luft, die naturgemäß mit Feuchtigkeit beladen ist. Es kommt schlagartig zur Kondensation der Feuchtigkeit, die sich an der Wandung der Bauteile niederschlägt und dabei Eiskristalle bildet. Wird nun die Pumpe zum Transport der Flüssigkeit zugeschaltet, werden diese Kristalle vom Flüssigkeitsstrom in den zu befüllenden Tank gespült. Dies wiederholt sich im Produktionszyklus des Tanks mehrfach und die Verschmutzung im Tank addiert sich daher so weit auf, bis die Qualitätsparameter des gespeicherten Produkts nicht mehr eingehalten werden. Der Tank muss in der Folge gereinigt werden. Dazu wird das Produkt meistens abgeblasen. Das ist bei Sauerstoff, Stickstoff, Argon oder anderen Luftgasen ökologisch unproblematisch, bei umweltschädigendem Methan wäre ein solcher Prozess jedoch nicht ohne Weiteres möglich. Es ist deshalb unumgänglich, diese Verschmutzungen mit absoluter Sicherheit zu vermeiden. Eine Kupplung für kryogenische Flüssigkeiten, die dem Oberbegriff des Anspruchs 1 entspricht, ist aus der US 5191914 A bekannt.

Totraumlose Kupplungen, die das Eindringen von Verschmutzungen prinzipiell verhindern würden, sind in den verschiedensten Bereichen bereits bekannt, jedoch nicht für die Verwendung mit tiefkalten Flüssigkeiten geeignet, da diese vereisen, Fehlbedienungen zulassen und sich nach Prozessende erst lösen lassen, wenn sie abgetaut sind.

Der vorliegenden Erfindung liegt daher die Aufgabe zugrunde, eine totraumlose Kupplung für die Verbindung von Leitungen für den Transport von tiefkalt verflüssigten Gasen zu schaffen, mit welcher das Eindringen von Verschmutzungen in den Produktstrom sicher verhindert werden kann und die in einfacher Weise bedient werden kann.

Zur Lösung dieser Aufgabe sieht die Erfindung bei einer Kupplung der eingangs genannten Art vor, dass die in der Trennebene miteinander zusammenwirkenden Flächen im miteinander verbundenen Zustand der Kupplungshälften einen abgedichteten Hohlraum begrenzen. Wird nun bei geschlossener Kupplung nach dem Öffnen der in den beiden Kupplungshälften angeordneten Ventile der Durchfluss der kalten Flüssigkeit freigegeben, umfließt diese die Ventilschließglieder und kommt dabei in den Bereich der Trennebene der beiden Kupplungshälften, wo sich Verschmutzungen im geöffneten Zustand der Kupplung angesammelt haben. Dabei bewirkt die kalte Flüssigkeit eine schnelle Temperaturabsenkung der umspülten Bauteile der Kupplung, sodass sich in dem erfindungsgemäß vorgesehenen Hohlraum ein Unterdruck einstellt, der ein Mitreißen der vorhandenen Oberflächenverschmutzung mit Sicherheit verhindert. Die Verschmutzung bleibt dadurch in dem ausgebildeten Hohlraum gefangen.

Der Hohlraum kann bevorzugt dadurch realisiert werden, dass zumindest eine der in der Trennebene miteinander zusammenwirkenden Flächen eine Vertiefung aufweist, wobei die Vertiefung von einer ringförmigen Dichtfläche umgeben ist. Besonders bevorzugt ist die Vertiefung zylindrisch ausgebildet oder von einer konkaven Fläche gebildet. Der die Vertiefung umgebende Rand der in der Trennebene miteinander zusammenwirkenden Flächen kann bevorzugt als metallisch dichtende Dichtfläche ausgeführt werden, wodurch in einfacher Art und Weise ein dichter Abschluss des beschriebenen Hohlraums gewährleistet ist.

Um die Kupplungshälften der Kupplung in einfacher und zuverlässiger Art und Weise miteinander zu verbinden, ist bevorzugt vorgesehen, dass die Kupplungshälften an den einander zugewandten Seiten jeweils mit einem Kupplungsflansch ausgebildet sind, wobei die Kupplungsflansche in der Trennebene verlaufende, miteinander zusammenwirkende Dichtflächen aufweisen. Dadurch, dass die miteinander zusammenwirkenden Flächen der Ventilschließglieder und die miteinander zusammenwirkenden Dichtflächen der Kupplungsflansche in einer gemeinsamen Ebene, nämlich der erwähnten Trennebene liegen, verschließen die Ventilschließglieder die jeweiligen Kupplungshälften bündig, sodass eine Kontamination der innen liegenden Bauteile mit Luft ausgeschlossen ist.

Um im geschlossenen Zustand der Kupplung ein Einschleppen von Verschmutzungen über die Kupplungsflansche zu verhindern, sieht eine bevorzugte Weiterbildung vor, dass die miteinander zusammenwirkenden Dichtflächen der Kupplungsflansche wenigstens eine Vertiefung aufweisen, sodass zwischen den miteinander zusammenwirkenden Dichtflächen im miteinander verbundenen Zustand der Kupplungshälften wenigstens ein abgedichteter Hohlraum entsteht. Beim Vorbeiströmen der kalten Flüssigkeit entsteht in dem wenigstens einen Hohlraum auf Grund der Temperaturabsenkung ein Unterdruck, der die beiden Dichtflächen der Kupplungsflansche noch stärker zueinander zieht und dadurch die Dichtwirkung erhöht.

Die Ventilsitze und die Ventilschließglieder der Ventile, die von der kalten Flüssigkeit umspült werden, sind vorteilhafterweise so ausgebildet, dass sich keine turbulenten Strömungsverhältnisse ergeben, die auf Grund der Druckunterschiede eventuell zu einem Mitreißen von Verschmutzungen führen könnten. Eine bevorzugte Ausbildung sieht daher vor, dass die Ventilsitze der Ventile jeweils von einer kegeligen Dichtfläche gebildet sind, wobei die kegeligen Dichtflächen der Ventile in der Trennebene bevorzugt denselben Durchmesser aufweisen. Eine besonders günstige Konstruktion ergibt sich hierbei, wenn die kegeligen Dichtflächen der Ventilsitze auf einem gemeinsamen Kegel liegen.

Für die Beendigung des Tankprozesses werden die Ventilschließglieder bevorzugt durch die Entlastung einer Feder in ihre Ausgangslage zurückgefahren, wodurch der Durchfluss der Flüssigkeit beendet wird. Die Kupplungshälften können in der Folge aber erst dann voneinander getrennt werden, wenn der im zwischen den in der Trennebene der miteinander zusammenwirkenden Flächen angeordneten Hohlraum herrschende Unterdruck gebrochen wird. Dies kann beispielsweise durch Wärmezufuhr, z.B. durch einen ohmschen Widerstand oder eine andere Wärmequelle, erfolgen. Eine bevorzugte Weiterbildung sieht hierbei aber vor, dass eine mit einem Entlastungsventil in Verbindung stehende Entlastungsbohrung in dem Hohlraum mündet. Der Unterdruck kann durch einfaches Öffnen des Entlastungsventil abgebaut werden.

Bevorzugt ist vorgesehen, dass wenigstens eine Kupplungshälfte eine vorzugsweise glockenförmige oder zylindrische Abdeckung trägt, welche die Kupplung im miteinander verbundenen Zustand der Kupplungshälften im Bereich der Trennebene überdeckt. Die Abdeckung sollte hierbei möglichst eng an den abgedeckten Bauteilen liegen, diese aber nicht berühren. Sobald das tiefkalt verflüssigte Gas durch die Kupplung strömt, kühlen sich die abgedeckten Bauteile ab, sodass auch die sich in den unter der Abdeckung entstehenden Hohlräumen eingeschlossene Luft abgekühlt, wobei Wasser kondensiert und gefriert. Da die ausfallende Wassermenge sehr gering ist und weitere Luft bei einer entsprechenden Abdichtung der Abdeckung nicht nachströmen kann, bilden sich dabei nur wenige Eiskristalle aus. Diese Eiskristalle behindern auf Grund ihrer geringen Menge nicht die Trennung der beiden Kupplungshälften.

Die Abdeckung kann aus einem verformbaren Material bestehen, sodass es leicht möglich ist, an der Abdeckung eventuell anhaftendes Eis durch Verformung zu beseitigen.

Eine weitere bevorzugte Ausbildung sieht vor, dass die Ventilschließglieder jeweils mit einem in axialer Richtung verschieblich gelagerten Ventilstößel zusammenwirken, der von einem Federelement in Richtung zum Ventilsitz beaufschlagt ist, wobei der Ventilstößel die das tiefkalt verflüssigte Gas führende Bohrung der Kupplungshälfte durchsetzt und das Federelement außerhalb des das tiefkalt verflüssigte Gas führenden Bereichs der Bohrung angeordnet ist. Dadurch wird sichergestellt, dass das Federelement nicht im kalten Bereich der Kupplung angeordnet ist, sodass die Lebensdauer erhöht und die zuverlässige Funktionsweise des Federelements gewährleistet ist.

Bevorzugt ist vorgesehen, dass der Ventilstößel mit einem Dichtungselement, insbesondere einem Faltenbalg zusammenwirkt. Der Faltenbalg kann hierbei die axiale Bewegung des Ventilstößels druckdicht ausgleichen.

Um den von der kalten Flüssigkeit durchströmten axialen Bereich der Kupplungshälften zu reduzieren, ist bevorzugt vorgesehen, dass eine Zu- bzw. Ableitung für das tiefkalt verflüssigte Gas radial in die Bohrung mündet.

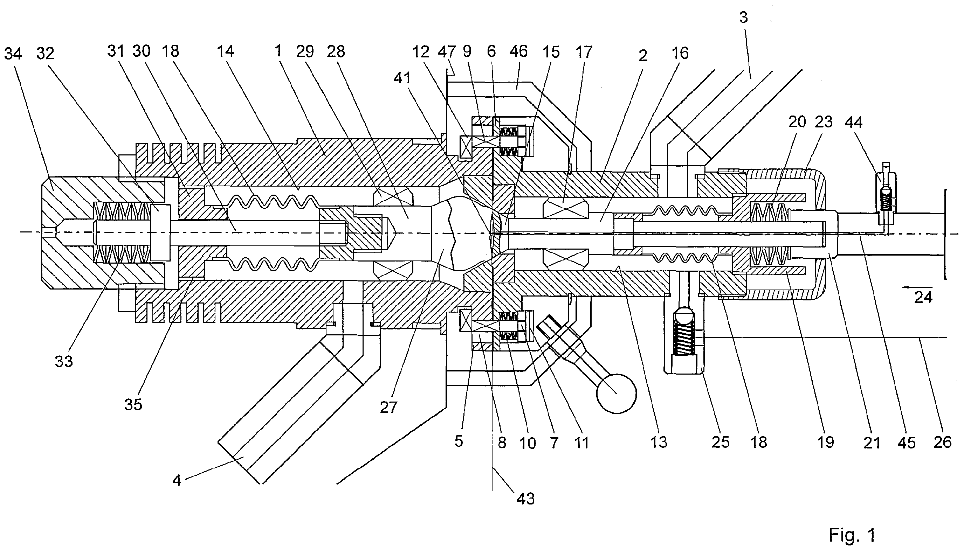

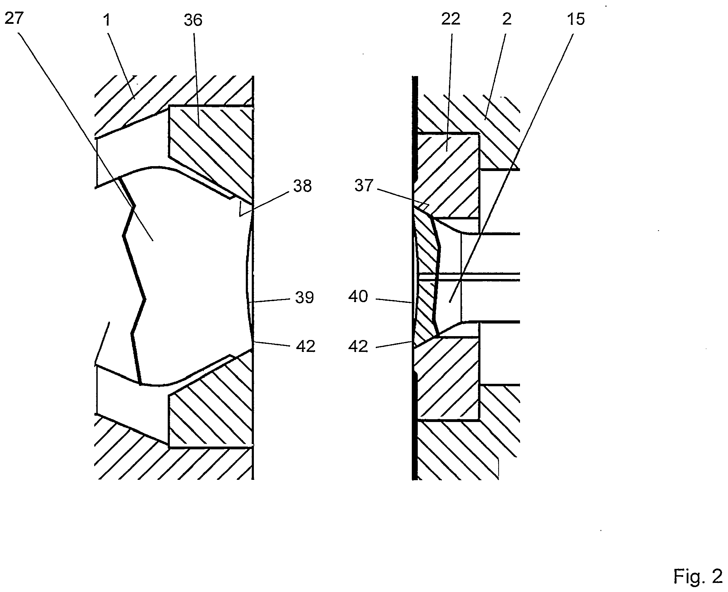

Die Erfindung wird nachfolgend anhand eines in der Zeichnung schematisch dargestellten Ausführungsbeispiels näher erläutert. In dieser zeigen Fig.1 die erfindungsgemäße Kupplung im Schnitt und Fig.2 eine Detailansicht der Ausbildung gemäß Fig.1 im Bereich der zueinander gewandten Stirnflächen der Kupplungshälften im auseinander gezogenen Zustand.

In Fig.1 ist eine aus den Kupplungshälften 1 und 2 bestehende Kupplung dargestellt, die der Verbindung einer Zuleitung 3 und einer Ableitung 4 dient. Die Zuleitung 3 ist an einem nicht dargestellten Lagertank für tiefkalt verflüssigtes Gas angeschlossen. Die Ableitung 4 ist beispielsweise an ein Tankfahrzeug angeschlossen, sodass nach dem Öffnen der Kupplung das im Lagertank gespeicherte tiefkalt verflüssigte Gas in den Tankwagen gelangen kann. In Fig.1 sind die Kupplungshälften 1 und 2 in miteinander verbundenem Zustand dargestellt. Die Kupplungshälften 1 und 2 weisen jeweils einen Kupplungsflansch 5 bzw. 6 auf, die mit Hilfe von Befestigungsmitteln 7 miteinander verbunden werden können. Die Befestigungsmittel 7 weisen im in Fig.1 dargestellten Ausführungsbeispiel jeweils einen eine Durchbrechung 8 durchsetzenden Bolzen 9 auf, dessen eines Ende einen sich gegen ein Federpaket 10 abstützenden Kopf 11 und dessen anderes Ende einen hakenförmigen, den Flansch 5 hintergreifenden Fortsatz 12 aufweist. Die Zuleitung 3 sowie die Ableitung 4 münden jeweils in einer Bohrung 13 bzw. 14 der Kupplungshälfte 1 bzw. 2, wobei in der Bohrung jeweils ein Ventil angeordnet ist, das den Durchfluss des über die Zuführungsleitung 3 zugeführten tiefkalt verflüssigten Gases wahlweise sperrt oder freigibt. Das in der Kupplungshälfte 2 angeordnete Ventil weist ein Ventilschließglied 15 auf, das von einem Ventilstössel 16 gehalten ist. Der Ventilstössel 16 ist mit Hilfe von Führungselementen 17 innerhalb der Bohrung 13 verschiebbar geführt. Der Ventilstössel 16 ist mit Hilfe eines Faltenbalgs 18 gegen ein in der Kupplungshälfte 2 starr festgelegtes Gehäuse 19 für ein Federpaket 20 abgedichtet. Der Ventilstössel 16 durchsetzt eine Durchbrechung des Gehäuses 19 und weist eine sich gegen das Tellerfederpaket 20 abstützende Einstellmutter 21 auf, mit welcher die Federkraft eingestellt werden kann, mit welcher das Ventilschließglied 15 gegen den Ventilsitz 22 gedrückt wird. Der Ventilstössel 16 durchsetzt eine auf die Kupplungshälfte 2 aufgeschraubte Endkappe 23 und kann im hinausragenden Bereich mit einem geeigneten Betätigungsmittel zusammenwirken. Die zum Betätigen des Ventils erforderliche mechanische Bewegung in Richtung des Pfeils 24 kann hierbei entweder manuell, pneumatisch, hydraulisch oder mit Hilfe eines elektrischen Antriebs erfolgen.

Der höchst zulässige Druck innerhalb der Kupplung wird durch ein mit der Bohrung 13 in Verbindung stehendes Sicherheitsventil 25 abgesichert, dessen Ausströmleitung 26 mit dem Gasraum des nicht dargestellten Lagertanks verbunden sein kann.

Das in der Kupplungshälfte 1 angeordnete Ventil weist ein Ventilschließglied 27 auf, das einstückig mit einem Ventilstössel 28 ausgebildet ist und mit Hilfe von Führungselementen 29 in der Bohrung 14 in axialer Richtung geführt ist. Der Ventilstössel 28 ist mit einer bolzenartigen Verlängerung 30 verbunden, die eine Durchbrechung eines die Bohrung 14 stirnseitig verschließenden Teils 31 durchsetzt und sich im aus der Bohrung 14 herausragenden Endabschnitt mit einem Teller 32 gegen ein Federpaket 33 abstützt. Das Federpaket 33 ist in einem Federgehäuse 34 aufgenommen, das mit Hilfe eines Gewindes 35 mit der Kupplungshälfte 1 verschraubt ist. Durch Verdrehung des Federgehäuses 34 kann die Federkraft eingestellt werden, mit der das Tellerfederpaket 33 das Ventilschließglied 27 gegen den Ventilsitz 36 drückt.

Wie dies besser aus der Detaildarstellung gemäß Fig.2 hervorgeht, weist das Ventilschließglied 15 eine kegelförmige Dichtfläche 37 auf, die sich gegen eine entsprechende kegelförmige Gegenfläche am Ventilsitz 22 abstützt. Auch das Ventilschließglied 27 weist eine kegelförmige Sitzfläche 38 auf, die sich gegen eine entsprechend kegelförmig ausgebildete Gegenfläche am Ventilsitz 36 abstützt. In der Darstellung gemäß Fig.1, in der die beiden Kupplungshälften 1 und 2 miteinander verbunden sind, ist ersichtlich, dass die beiden kegelförmigen Dichtflächen bzw. die kegelförmigen Gegenflächen auf einem gemeinsamen Kegel liegen. Das bedeutet, dass die miteinander zusammenwirkenden Flächen 39 und 40 der Ventilschließglieder 15 und 27 den gleichen Durchmesser aufweisen.

Die miteinander zusammenwirkenden Flächen 39 und 40 der Ventilschließglieder weisen jeweils eine durch eine konkave Fläche gebildete Vertiefung auf, sodass sich im miteinander verbundenen Zustand der Kupplungshälften 1 und 2 ein Hohlraum 41 ausbildet. Der Hohlraum 41 wird von ringförmigen Dichtflächen 42 umgeben, sodass der Hohlraum 41 im miteinander verbundenen Zustand der Kupplungshälften 1 und 2 abgedichtet ist.

Die Ebene, in der die beiden Kupplungshälften 1 und 2 aneinander liegen, ist mit 43 bezeichnet und wird als Trennebene bezeichnet. In Fig.1 ist ersichtlich, dass sowohl die miteinander zusammenwirkenden Dichtflächen der Kupplungsflansche 5 und 6 in der Trennebene 43 liegen als auch die miteinander zusammenwirkenden Flächen 39 und 40 der Ventilschließglieder 15 und 27. Dadurch sind die beiden Kupplungshälften 1 und 2 durch die Ventilschließglieder 15 bzw. 27 jeweils bündig verschlossen, sodass im nicht miteinander verbundenen Zustand der Kupplungshälften 1 und 2 keine Luft und damit keine Verschmutzung in das Innere der Kupplungshälften dringen kann. Lediglich die Dichtflächen der Kupplungsflansche 5 und 6 sowie der Stirnflächen 39 und 40 der Ventilschließglieder 15 und 27 sind Verschmutzungen ausgesetzt.

Um bei miteinander verbundenen Kupplungshälften 1 und 2 den Transport von tiefkalt verflüssigtem Gas von einem Lagertank über die Zuführleitung 3, die Kupplung und die Leitung 4 zu einem Tankwagen zu ermöglichen, wird der Ventilstössel 16 durch eine geeignete Betätigung in Richtung des Pfeils 24 verschoben, sodass das Ventilschließglied 15 vom zugehörigen Ventilsitz 22 abgehoben wird. Bei dieser Öffnungsbewegung des Ventils wird das Ventilschließglied 27 mitgenommen und von seinem zugehörigen Ventilsitz 36 ebenfalls abgehoben, sodass das tiefkalt verflüssigte Gas die Kupplung durchfließen kann. Mit dem eintretenden Produktstrom besteht die Gefahr, dass die am Ventilschließglied abgesetzten Verschmutzungen vom Strom erfasst und mitgerissen werden. Dies wird erfindungsgemäß dadurch verhindert, dass die allfälligen Verschmutzungen aufgrund des in dem Hohlraum 41 bei der Temperatursenkung entstehenden Unterdrucks dort gefangen gehalten werden.

Wenn der Befüllvorgang beendet ist, werden die Ventilschließglieder 27 und 15 in ihre Ausgangsposition zurückverfahren und die Kupplungshälften 1 und 2 können in der Folge voneinander getrennt werden, sobald der in dem Hohlraum 41 herrschende Unterdruck gebrochen wurde. Dies erfolgt durch ein Entlastungsventil 44, das über eine im Inneren des Ventilstössels 16 verlaufende Bohrung 45 mit dem Hohlraum 41 verbunden ist.

Zum Schutz vor Vereisungen der Verriegelung, wie z.B. der Verbindungsmittel 7, ist eine Abdeckung 46 vorgesehen, welche die Kupplungsflansche 5 und 6 überdeckt und sich stirnseitig dichtend gegen eine Stirnfläche 47 abstützt.

## Patentansprüche

1. Kupplung für tiefkalt verflüssigte Gase umfassend zwei lösbar miteinander verbindbare komplementäre Kupplungshälften (1, 2), die jeweils ein den Durchfluss des verflüssigten Gases sperrendes oder freigebendes Ventil aufweisen, wobei die Ventile jeweils ein in axialer Richtung verschiebbar gelagertes Ventilschließglied (15, 27) aufweisen, das gegen einen Ventilsitz (22, 36) pressbar ist, wobei die Ventilschließglieder im miteinander verbundenen Zustand der Kupplungshälften entlang einer Trennebene (43) der Kupplung in axialer Richtung miteinander zusammenwirken, **dadurch gekennzeichnet, dass** die in der Trennebene (43) miteinander zusammenwirkenden Flächen (39,40) im miteinander verbundenen Zustand der Kupplungshälften (1,2) einen abgedichteten Hohlraum (41) begrenzen.

2. Kupplung nach Anspruch 1, **dadurch gekennzeichnet, dass** zumindest eine der die in der Trennebene (43) miteinander zusammenwirkenden Flächen (39,40) eine Vertiefung aufweist, wobei die Vertiefung von einer vorzugsweise ringförmigen Dichtfläche (42) umgeben ist.

3. Kupplung nach Anspruch 2, **dadurch gekennzeichnet, dass** die Vertiefung zylindrisch ausgebildet oder von einer konkaven Fläche gebildet ist.

4. Kupplung nach Anspruch 1, 2 oder 3, **dadurch gekennzeichnet, dass** die Kupplungshälften (1,2) an den einander zugewandten Seiten jeweils mit einem Kupplungsflansch (5,6) ausgebildet sind, wobei die Kupplungsflansche (5,6) in der Trennebene (43) verlaufende, miteinander zusammenwirkende Dichtflächen aufweisen.

5. Kupplung nach Anspruch 4, **dadurch gekennzeichnet, dass** die miteinander zusammenwirkenden Dichtflächen der Kupplungsflansche (5,6) eine Vertiefung aufweisen, sodass zwischen den miteinander zusammenwirkenden Dichtflächen im miteinander verbundenen Zustand der Kupplungshälften (1,2) wenigstens ein abgedichteter Hohlraum entsteht.

6. Kupplung nach einem der Ansprüche 1 bis 5, **dadurch gekennzeichnet, dass** die Ventilsitze (22,36) der Ventile jeweils von einer kegeligen Dichtfläche (37,38) gebildet sind.

7. Kupplung nach Anspruch 6, **dadurch gekennzeichnet, dass** die kegeligen Dichtflächen (37,38) der Ventile in der Trennebene (43) denselben Durchmesser aufweisen.

8. Kupplung nach Anspruch 6 oder 7, **dadurch gekennzeichnet, dass** die kegeligen Dichtflächen (37,38) der Ventilsitze (22,36) auf einem gemeinsamen Kegel liegen.

9. Kupplung nach einem der Ansprüche 1 bis 8, **dadurch gekennzeichnet, dass** eine mit einem Entlastungsventil (44) in Verbindung stehende Entlastungsbohrung (45) in dem Hohlraum (41) mündet.

10. Kupplung nach einem der Ansprüche 1 bis 9, **dadurch gekennzeichnet, dass** wenigstens eine Kupplungshälfte (1,2) eine vorzugsweise glockenförmige oder zylindrische Abdeckung (46) trägt, welche die Kupplung im miteinander verbundenen Zustand der Kupplungshälften (1,2) im Bereich der Trennebene (43) überdeckt.

11. Kupplung nach Anspruch 10, **dadurch gekennzeichnet, dass** die Abdeckung (46) aus einem verformbaren Material besteht.

12. Kupplung nach einem der Ansprüche 1 bis 11, **dadurch gekennzeichnet, dass** die Ventilschließglieder (15,27) jeweils mit einem in axialer Richtung verschieblich gelagerten Ventilstößel (16,28) zusammenwirken, der von einem Federelement (20,33) in Richtung zum Ventilsitz (22,36) beaufschlagt ist, wobei der Ventilstößel (16,28) die das tiefkalt verflüssigte Gas führende Bohrung (13,14) der Kupplungshälfte (1,2) durchsetzt und das Federelement (20,33) außerhalb des das tiefkalt verflüssigte Gas führenden Bereichs der Bohrung (13,14) angeordnet ist.

13. Kupplung nach Anspruch 12, **dadurch gekennzeichnet, dass** der Ventilstößel (16,28) mit einem Dichtungselement, vorzugsweise einem Faltenbalg (18) zusammenwirkt.

14. Kupplung nach Anspruch 12 oder 13, **dadurch gekennzeichnet, dass** eine Zu- bzw. Ableitung (3,4) für das tiefkalt verflüssigte Gas radial in die Bohrung (13,14) mündet.

## Claims

1. A coupling for cryogenically liquefied gases, comprising two complementary coupling halves (1, 2), which can be connected to one another so as to be capable of being detached and which in each case encompass a valve, which blocks or releases the flow-through of the liquefied gas, wherein the valves in each case exhibit a valve closing element (15, 27), which is supported so as to be capable of being displaced in axial direction and which can be pressed against a valve seat (22, 36), wherein the valve closing elements interact with one another in axial direction along a parting plane (43) of the coupling when the coupling halves are connected to one another, **characterized in that** the surfaces (39, 40), which interact with one another in the parting plane (43), define a sealed hollow space (41) when the coupling halves (1, 2) are connected to one another.

2. The coupling according to claim 1, **characterised in that** at least one of the surfaces (39, 40), which interact with one another in the parting plane (43), encompasses a recess, wherein the recess is surrounded by a preferably ring-shaped sealing surface (42).

3. The coupling according to claim 2, **characterized in that** the recess is embodied cylindrically or is formed by a concave surface.

4. The coupling according to claim 1, 2 or 3, **characterized in that** the coupling halves (1, 2) are in each case embodied with a coupling flange (5, 6) on the sides, which face one another, wherein the coupling flanges (5, 6) encompass sealing surfaces, which run in the parting plane (43) and which interact with one another.

5. The coupling according to claim 4, **characterized in that** the interacting sealing surfaces of the coupling flanges (5, 6) encompass a recess, so that at least one sealed hollow space is created between the interacting sealing surfaces when the coupling halves (1, 2) are connected to one another.

6. The coupling according to one of claims 1 to 5, **characterized in that** the valve seats (22, 36) of the valves are in each case formed by a cone-shaped sealing surface (37, 38).

7. The coupling according to claim 6, **characterized in that** the cone-shaped sealing surfaces (37, 38) of the valves exhibit the same diameter in the parting plane (43).

8. The coupling according to claim 6 or 7, **characterized in that** the cone-shaped sealing surfaces (37, 38) of the valve seats (22, 36) are located on a common cone.

9. The coupling according to one of claims 1 to 8, **characterized in that** a relief bore (45), which is in contact with a relief valve (44), leads to the hollow space (41).

10. The coupling according to one of claims 1 to 9, **characterized in that** at least one coupling half (1, 2) supports a preferably bell-shaped or cylindrical cover (46), which covers the coupling in the area of the parting plane (43) when the coupling halves (1, 2) are connected to one another.

11. The coupling according to claim 10, **characterized in that** the cover (46) consists of a deformable material.

12. The coupling according to one of claims 1 to 11, **characterized in that** the valve closing elements (15, 27) in each case interact with a valve tappet (16, 28), which is supported so as to be capable of being displaced in axial direction and on which a spring element (20, 33) acts in the direction of the valve seat (22, 36), wherein the valve tappet (16, 28) permeates the bore (13, 14) of the coupling halves (1, 2), which guides the cryogenically liquefied gas and the spring element (20, 33) is arranged outside of the area of the bore (13, 14), which guides the cryogenically liquefied gas.

13. The coupling according to claim 12, **characterized in that** the valve tappet (16, 28) interacts with a sealing element, preferably a bellows (18).

14. The coupling according to claim 12 or 13, **characterized in that** a feed line or discharge (3, 4), respectively, for the cryogenically liquefied gas leads radially into the bore (13, 14) .

## Revendications

1. Raccord pour des gaz cryogéniques comprenant deux moitiés de raccord (1, 2) complémentaires pouvant être reliées l'une à l'autre de manière amovible, lesquelles présentent respectivement une soupape fermant ou libérant le passage du gaz liquéfié, dans lequel les soupapes présentent respectivement un organe de fermeture de soupape (15, 27) monté de manière à pouvoir coulisser dans une direction axiale, lequel organe de fermeture de soupape peut être pressé contre un siège de soupape (22, 36), dans lequel les organes de fermeture de soupape coopèrent entre eux dans une direction axiale dans l'état relié entre elles des moitiés de raccord le long d'un plan de séparation (43) du raccord, **caractérisé en ce que** les surfaces (39, 40) coopérant entre elles dans le plan de séparation (43) délimitent dans l'état relié entre elles des moitiés de raccord (1, 2) un espace creux (41) étanchéifié.

2. Raccord selon la revendication 1, **caractérisé en ce qu'**au moins une des surfaces (39, 40) coopérant entre elles dans le plan de séparation (43) présente un renfoncement, dans lequel le renfoncement est entouré d'une surface étanche (42) de préférence de forme annulaire.

3. Raccord selon la revendication 2, **caractérisé en ce que** le renfoncement est réalisé de manière cylindrique ou est formé par une surface concave.

4. Raccord selon la revendication 1, 2 ou 3, **caractérisé en ce que** les moitiés de raccord (1, 2) sont réalisées au niveau des côtés tournés les uns vers les autres respectivement avec une bride d'accouplement (5, 6), dans lequel les brides d'accouplement (5, 6) présentent des surfaces étanches s'étendant dans le plan de séparation (43), coopérant les unes avec les autres.

5. Raccord selon la revendication 4, **caractérisé en ce que** les surfaces étanches coopérant les unes avec les autres des brides d'accouplement (5, 6) présentent un renfoncement, si bien qu'au moins un espace creux étanchéifié apparaît entre les surfaces étanches coopérant entre elles dans l'état relié entre elles des moitiés de raccord (1, 2).

6. Raccord selon l'une quelconque des revendications 1 à 5, **caractérisé en ce que** les sièges de soupape (22, 36) des soupapes sont formés respectivement par une surface étanche (37, 38) coniques.

7. Raccord selon la revendication 6, **caractérisé en ce que** les surfaces étanches (37, 38) coniques des soupapes présentent dans le plan de séparation (43) le même diamètre.

8. Raccord selon la revendication 6 ou 7, **caractérisé en ce que** les surfaces étanches (37, 38) coniques des sièges de soupape (22, 36) se trouvent sur un cône commun.

9. Raccord selon l'une quelconque des revendications 1 à 8, **caractérisé en ce qu'**un alésage de décharge (45) relié à une soupape de décharge (44) débouche dans l'espace creux (41).

10. Raccord selon l'une quelconque des revendications 1 à 9, **caractérisé en ce qu'**au moins une moitié de raccord (1, 2) supporte un recouvrement (46) de préférence en forme de cloche ou cylindrique, lequel surmonte le raccord dans la zone du plan de séparation (43) dans l'état relié entre elles des moitiés de raccord (1, 2).

11. Raccord selon la revendication 10, **caractérisé en ce que** le recouvrement (46) est constitué d'un matériau déformable.

12. Raccord selon l'une quelconque des revendications 1 à 11, **caractérisé en ce que** les organes de fermeture de soupape (15, 27) coopèrent respectivement avec un coulisseau de soupape (16, 28) monté de manière à pouvoir coulisser dans une direction axiale, lequel est soumis à l'action d'un élément de ressort (20, 33) en direction du siège de soupape (22, 36), dans lequel le coulisseau de soupape (16, 28) traverse l'alésage (13, 14) guidant le gaz cryogénique des moitiés de raccord (1, 2) et l'élément de ressort (20, 33) est disposé à l'extérieur de la zone, guidant le gaz cryogénique de l'alésage (13, 14).

13. Raccord selon la revendication 12, **caractérisé en ce que** le coulisseau de soupape (16, 28) coopère avec un élément d'étanchéité, de préférence un soufflet (18).

14. Raccord selon la revendication 12 ou 13, **caractérisé en ce qu'**un conduit d'arrivée ou d'évacuation (3, 4) pour le gaz cryogénique débouche de manière radiale dans l'alésage (13, 14).
